# EUROPEAN PATENT APPLICATION

(11) **EP 4 607 283 A1**
(43) Date of publication of application: **27.08.2025**
(21) Application number: 25151648.0
(22) Date of filing: 14.01.2025
(51) Int. Cl.: G03G 15/00

(54) **DIAGNOSTIC APPARATUS, CONTROL METHOD FOR THE SAME, STORAGE MEDIUM, AND IMAGE FORMING APPARATUS**

(30) Priority: 19.01.2024 JP 2024006984
(71) Applicant: CANON KABUSHIKI KAISHA, Tokyo 146-8501 (JP)
(72) Inventor: MIURA, Riko, Tokyo, 146-8501 (JP)
(74) Representative: TBK

(57) **Abstract**

The present disclosure is directed to diagnostic apparatus comprising: one or more memory devices that store a set of instructions; and one or more processors that execute the set of instructions to: determine whether or not to execute sign diagnosis processing for detecting a sign of abnormality of image forming means when an image is formed on a recording medium by the image forming means; execute the sign diagnosis processing on a read image obtained by reading means reading the image formed by the image forming means, in a case where it is determined that the sign diagnosis processing is to be executed; and in a case where the sign of abnormality is detected, perform automatic repair of the image forming means before the sign of abnormality becomes an abnormality of a predetermined level.

## Description

### BACKGROUND OF THE INVENTION

### Field of the Invention

The present invention relates to a diagnostic apparatus for performing diagnosis of an apparatus based on a read image of an image obtained through image formation, a control method for the same, a storage medium, and an image forming apparatus.

### Description of the Related Art

Some abnormalities in printed images cause the image quality level to deteriorate as the number of printed sheets increases. Based on this feature, it is possible to detect an "image abnormality at an image quality level acceptable to the user" (hereinafter referred to as a "sign") and predict the occurrence of an "image abnormality at an image quality level not acceptable to the user" (hereinafter referred to as an "image defect"). This makes it possible to repair the location of the abnormality that is causing an image abnormality while maintaining the image quality level desired by the user. Japanese Patent Laid-Open No. 2019-203997 proposes a technology for outputting a test chart, detecting a sign, and predicting the occurrence of an image defect in order to determine in advance when to replace a member.

However, the above-mentioned conventional technology has the following problem. In a configuration in which a test chart is used to predict an image abnormality, it is necessary to output the test chart during printing to execute prediction processing. Accordingly, there is a risk that printing productivity will decrease.

### SUMMARY OF THE INVENTION

The present invention enables the realization of a mechanism for appropriately performing diagnosis of a sign of abnormality in a diagnostic apparatus while suppressing a processing load.

The present invention in its first aspect provides a diagnostic apparatus as specified in claims 1-16 and 21.

The present invention in its second aspect provides a control method as specified in claim 17.

The present invention in its third aspect provides a program as specified in claim 18.

The present invention in its forth aspect provides an image forming apparatus as specified in claims 19-20.

Further features of the present invention will be apparent from the following description of exemplary embodiments with reference to the attached drawings.

### BRIEF DESCRIPTION OF THE DRAWINGS

FIG. 1 is a diagram showing an example of a network configuration including a printing system according to an embodiment.
FIG. 2 is a cross-sectional view illustrating an example of a hardware configuration of an image forming apparatus according to an embodiment.
FIG. 3 is a block diagram showing an internal configuration of an image forming apparatus, an external controller, and a client PC according to an embodiment.
FIG. 4 is a flowchart showing a procedure of sign diagnosis according to an embodiment.
FIG. 5 is a diagram showing image abnormality levels according to an embodiment.
FIG. 6 is a diagram showing an example of diagnosable area settings for diagnosable items in RIP data according to an embodiment.
FIG. 7 illustrates feature extractability maps for each item for which feature extraction is possible according to one embodiment.
FIG. 8 is a flowchart showing a sign diagnosis execution procedure for when executing sign diagnosis according to an embodiment.
FIG. 9 is a schematic diagram of a screen displaying a result of sign diagnosis according to an embodiment.
FIG. 10 is a diagram showing trends in the sizes and contrasts of signs according to an embodiment.
FIG. 11 is a diagram showing a deterioration prediction table according to an embodiment.
FIG. 12 is a flowchart showing a procedure of sign diagnosis when sign diagnosis is performed after an image is read according to an embodiment.
FIG. 13 is a flowchart showing a procedure for when executing sign diagnosis in a case where sign diagnosis determination is performed after an image is read according to an embodiment.
FIG. 14 is a diagram showing an example of an occurrence of a periodic sign according to an embodiment.
FIG. 15 is a diagram showing an example of correspondence between parts and period information according to an embodiment.
FIG. 16 is a diagram showing an example in which a sign occurs periodically across consecutive pages according to an embodiment.
FIG. 17 is a flowchart showing a procedure for sign diagnosis when consecutive images are set as target images for sign diagnosis according to an embodiment.
FIG. 18 is a flowchart showing a procedure for performing sign diagnosis in parallel with inspection processing according to an embodiment.
FIG. 19 is a diagram showing an example of a screen displaying a result of inspection processing and a result of sign diagnosis in parallel according to an embodiment.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### First Embodiment

### System Configuration

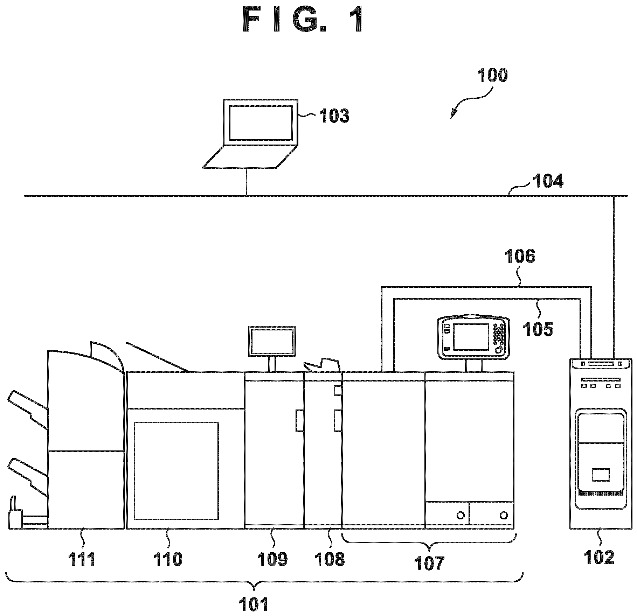

A first embodiment of the present invention will be described below. An example of a network configuration including a printing system (image processing system) according to this embodiment will be described with reference to FIG. 1. As shown in FIG. 1, a printing system 100 includes an image forming apparatus 101 and an external controller 102. The image forming apparatus 101 and the external controller 102 are connected to each other via an internal LAN 105 and a video cable 106 so as to be able to communicate with each other. The external controller 102 is communicably connected to a client PC 103 via an external LAN 104. Note that in this embodiment, a mode is described as an example in which the image forming apparatus 101 and the external controller 102 are provided separately, but this is not intended to limit the present invention, and for example, the external controller 102 may also be provided integrally with the image forming apparatus 101. In this case, the image forming apparatus 101 and the client PC 103 are connected so as to be able to communicate with each other.

The client PC 103 can issue a printing instruction to the external controller 102 via the external LAN 104. A printer driver having a function of converting image data to be subjected to print processing into a page description language (PDL) that can be processed by the external controller 102 is installed in the client PC 103. A user who wishes to perform printing can operate the client PC 103 to issue a printing instruction from various applications installed in the client PC 103 via the printer driver. The printer driver transmits PDL data, which is print data, to the external controller 102 based on a printing instruction from the user. The PDL data is print data designated by the user, or data generated or selected within the client PC 103. Upon receiving the PDL data from the client PC 103, the external controller 102 analyzes and interprets the received PDL data. Based on the interpretation result, rasterization processing is performed to generate a bitmap image (print image data) with a resolution suited to the image forming apparatus 101, and a print job is input to the image forming apparatus 101 to instruct printing.

Next, the image forming apparatus 101 will be described. In the image forming apparatus 101, a plurality of apparatuses having different functions are connected to enable complex printing processing such as bookbinding. The image forming apparatus 101 includes a printing unit 107 (image forming unit), an inserter 108, a sign diagnosis unit 109, a stacker 110, and a finisher 111. Each module will be described below.

The printing unit 107 prints an image according to the content of the print job and discharges the printed recording medium (paper, sheet, etc.). The printed recording medium discharged from the printing unit 107 is transported through each apparatus in the following order: the sign diagnosis unit 109, the stacker 110, and the finisher 111. In this embodiment, the image forming apparatus 101 of the printing system 100 is an example of an image forming apparatus, but the printing unit 107 included in the image forming apparatus 101 is also called an image forming apparatus in some cases. The printing unit 107 forms (prints) an image on a recording medium that is fed and transported from a paper feed unit disposed below the printing unit 107, using toner (color material) that is a recording medium.

The inserter 108 is an apparatus that inserts partition recording media or the like to separate a series of recording media transported from the printing unit 107 at an appropriate position, for example. The sign diagnosis unit 109 is an apparatus that detects an "image abnormality at an image quality level acceptable to the user" (hereinafter referred to as a sign) for the image forming apparatus 101 and predicts an "image abnormality at an image quality level not acceptable to the user" (hereinafter referred to as an image defect), based on the printed recording medium on which an image was printed by the printing unit 107 and which was transported along the transport path. Specifically, the sign diagnosis unit 109 reads the image printed on the transported printed recording medium, and performs diagnosis based on the obtained read image. In sign diagnosis, a sign is detected based on the difference in read signal values in the read image, and an image defect is predicted based on the information of the detected sign. The processing of the sign diagnosis unit will be described in detail later. Note that the use of the sign diagnosis unit is not limited to the above example. An inspection system that inspects the printed recording medium for printing abnormalities and a diagnosis system that performs diagnosis of an abnormality in the image forming apparatus 101 based on image defects may also be included.

The stacker 110 is an apparatus capable of stacking a large number of printed recording media. The finisher 111 is an apparatus capable of executing finishing processing such as stapling, punching, and saddle stitching on the transported printed recording medium. After being processed by the finisher 111, the recording medium is discharged to a predetermined discharge tray.

In the configuration example of FIG. 1, the external controller 102 is connected to the image forming apparatus 101, but this embodiment can be applied also to a different configuration. For example, a configuration may be used in which the image forming apparatus 101 is connected to the external LAN 104 and print data is transmitted from the client PC 103 to the image forming apparatus 101 without going through the external controller 102. In this case, data analysis and rasterization of the print data is performed by the image forming apparatus 101.

### Hardware Configuration of Image Forming Apparatus 101

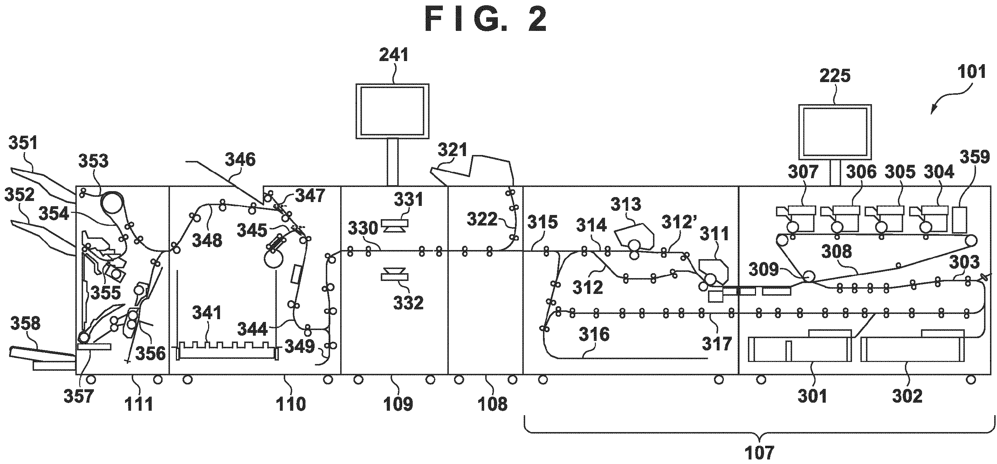

An example of a hardware configuration of the image forming apparatus 101 according to this embodiment will be described with reference to FIG. 2. An example of specific operations of the image forming apparatus 101 will be described below with reference to FIG. 2. In the printing unit 107, various recording media (sheets) are stored in a paper feed deck. During image formation, the uppermost recording medium among the recording media stored in each paper feed deck is separated one by one and fed to a transport path 303.

Each of image forming stations 304 to 307 includes a photosensitive drum (photoconductor), and forms a toner image on the photosensitive drum using toner of a different color. Specifically, the image forming stations 304 to 307 form toner images using yellow (Y), magenta (M), cyan (C), and black (K) toners, respectively.

The toner images of the respective colors formed in the image forming stations 304 to 307 are transferred onto an intermediate transfer belt 308 in order, so as to be overlaid on each other (primary transfer). The toner images transferred onto the intermediate transfer belt 308 are transported to a secondary transfer position 309 as the intermediate transfer belt 308 rotates. At the secondary transfer position 309, the toner images are transferred from the intermediate transfer belt 308 onto the recording medium transported through the transport path 303 (secondary transfer). After the secondary transfer, the recording medium is transported to a fixing unit 311. The fixing unit 311 includes a pressure roller and a heating roller. Heat and pressure are applied to the recording medium while it passes between these rollers, thereby performing a fixing treatment in which the toner images are fixed onto the recording medium. The recording medium that has passed through the fixing unit 311 is transported through a transport path 312 to a connection point 315 between the printing unit 107 and the sign diagnosis unit 109. In this manner, a color image is formed (printed) on the recording medium.

If further fixing treatment is required depending on the type of recording medium, the recording medium that has passed through the fixing unit 311 is guided to a transport path 314 in which a fixing unit 313 is provided. The fixing unit 313 performs a further fixing treatment on the recording medium transported through the transport path 314. The recording medium that has passed through the fixing unit 313 is transported to the connection point 315. Also, if an operation mode of performing double-sided printing is set, an image is printed on a first side, and the recording medium transported through the transport path 312 or the transport path 314 is guided to an inversion path 316. The recording medium inverted by the inversion path 316 is guided to a double-sided transport path 317 and transported to the secondary transfer position 309. As a result, toner images are transferred to a second surface of the recording medium, which is opposite to the first surface, at the secondary transfer position 309. Thereafter, the recording medium passes through the fixing unit 311 (and the fixing unit 313), thereby completing the formation of a color image on the second side of the recording medium.

When the formation (printing) of an image in the printing unit 107 is completed, the printed recording medium is transported to the connection point 315 and then transported into the sign diagnosis unit 109. The sign diagnosis unit 109 includes image reading units 331 and 332 each having a contact image sensor (CIS) on the transport path 330 through which the printed recording medium from the printing unit 107 is transported. The image reading units 331 and 332 are arranged at positions facing each other across the transport path 330. The image reading units 331 and 332 read the upper surface (first side) and the lower surface (second side) of the recording medium, respectively. Note that the image reading unit may also be constituted by, for example, a charge coupled device (CCD) or line scan camera instead of a CIS.

The sign diagnosis unit 109 executes sign diagnosis processing based on an instruction to execute sign diagnosis processing. Specifically, the instruction to execute sign diagnosis may be given using any method by which it is possible to determine whether or not to execute sign image diagnosis, such as a method of associating whether or not to execute sign diagnosis processing with a print job in advance, or a method of pressing a sign image diagnosis execution button at the start of a job. It is also possible to use an automatic setting method, such as a method of automatically performing setting so as to execute sign image diagnosis at the same time as startup. When an instruction to perform sign diagnosis processing is issued, the sign diagnosis unit 109 determines whether or not an image printed on a printed recording medium transported along the transport path 330 is to be used for sign diagnosis. Then, using the read image of the recording medium determined as the target of sign diagnosis, image sign diagnosis processing is executed to determine whether or not a sign has occurred in the image forming apparatus 101. A recording medium determined as not being a target for sign diagnosis is not set as a target image for image sign diagnosis processing. Specifically, at a timing when a recording medium that has been determined as a sign diagnosis target among the printed recording media being transported reaches a predetermined position, the sign diagnosis unit 109 executes reading processing for reading the image of the printed recording medium using image reading units 331 and 332. A recording medium that is not a diagnosis target may also be subjected to the reading processing in the same manner as a recording medium that is a diagnosis target, or may not be subjected to the reading processing. The recording media that have passed through the sign diagnosis unit 109 are transported to the stacker 110 in sequence.

The stacker 110 includes a stack tray 341 as a tray on which the printed recording medium transported from the sign diagnosis unit 109 disposed upstream in the transport direction of the printed recording media is stacked. The printed recording medium that has passed through the sign diagnosis unit 109 is transported along a transport path 344 in the stacker 110. The printed recording medium transported along the transport path 344 is guided to a transport path 345, whereby the printed recording medium is stacked on the stack tray 341. Printed recording media that are transported without being stacked or discharged in the stacker 110 are transported to the downstream finisher 111 via a transport path 348.

The stacker 110 further includes an inversion unit 349 for inverting the orientation of the printed recording medium being transported. The inversion unit 349 is used, for example, to make the orientation of the recording medium input into the stacker 110 the same as the orientation of the printed recording medium when it is stacked in the stack tray 341 and output from the stacker 110. Note that the inversion unit 349 does not perform an inversion operation on the printed recording medium that is transported to the finisher 111 without being stacked in the stacker 110.

The finisher 111 executes a finishing function designated by a user on the printed recording medium transported from the sign diagnosis unit 109, which is disposed upstream in the transport direction of the printed recording medium. In this embodiment, the finisher 111 has finishing functions such as a stapling function (one or two-point binding), a punching function (two or three holes), and a saddle stitch binding function. The finisher 111 includes two discharge trays 351 and 352. When finishing processing is not to be performed by the finisher 111, the printed recording medium transported to the finisher 111 is discharged to a discharge tray 351 via a transport path 353. When finishing processing such as stapling is to be performed by the finisher 111, the printed recording medium transported to the finisher 111 is guided to a transport path 354. The finisher 111 uses a finishing processing unit 355 to execute finishing processing designated by a user on the printed recording medium transported along the transport path 354, and discharges the printed recording medium subjected to the finishing processing onto a discharge tray 352.

### Functional Configurations

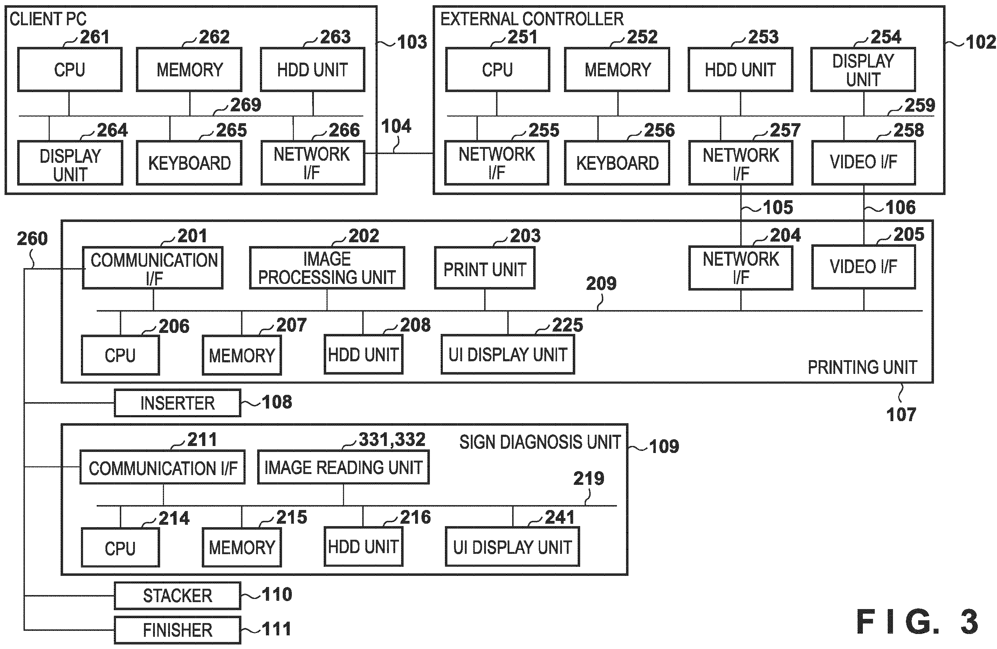

Functional configurations of the image forming apparatus 101, the external controller 102, and the client PC 103 according to this embodiment will be described with reference to FIG. 3. The printing unit 107 of the image forming apparatus 101 includes a communication interface (I/F) 201, a network I/F 204, a video I/F 205, a CPU 206, a memory 207, an HDD unit 208, and a UI display unit 225. The printing unit 107 further includes an image processing unit 202 and a print unit 203. These components are connected to each other via a system bus 209 so as to be able to transmit and receive data to and from each other.

The communication I/F 201 is connected to the sign diagnosis unit 109, the stacker 110, and the finisher 111 via a communication cable 260. The CPU 206 performs communication for controlling each apparatus via the communication I/F 201. The network I/F 204 is connected to the external controller 102 via the internal LAN 105 and is used for communication of control data and the like. The video I/F 205 is connected to the external controller 102 via the video cable 106 and is used for communication of data such as image data. Note that the printing unit 107 (image forming apparatus 101) and the external controller 102 may also be connected by only the video cable 106, as long as the operation of the image forming apparatus 101 can be controlled by the external controller 102. The HDD unit 208 stores various programs and data. The CPU 206 executes a program stored in the HDD unit 208 to control the overall operation of the printing unit 107. The HDD unit 208 also stores the number of printed sheets obtained by counting the total number of sheets that have been printed, and this number is used to determine whether or not to execute automatic repair. The memory 207 stores programs and data required when the CPU 206 performs various types of processing. The memory 207 operates as a work area for the CPU 206. The UI display unit 225 receives input of various settings and operation instructions from the user, and is used for display of various types of information, such as setting information and the processing status of a print job. For example, the printer 100 receives various instructions from the user, such as instructions to execute and set sign diagnosis, and settings for paper information.

The sign diagnosis unit 109 includes a communication I/F 211, a CPU 214, a memory 215, an HDD unit 216, the image reading units 331 and 332, and a UI display unit 241. These devices are connected via a system bus 219 so as to be able to transmit and receive data to and from each other. The communication I/F 211 is connected to the printing unit 107 via the communication cable 260. The CPU 214 performs communication required for controlling the sign diagnosis unit 109 via the communication I/F 211. The CPU 214 controls the operation of the sign diagnosis unit 109 by executing a control program stored in the memory 215. The memory 215 stores the control program for the sign diagnosis unit 109. The image reading units 331 and 332 read images from the transported recording medium according to instructions from the CPU 214. The CPU 214 performs diagnosis of whether or not a sign has occurred in the image forming apparatus 101 based on the read images for sign diagnosis read by the image reading units 331 and 332.

The UI display unit 241 is used to display the sign diagnosis result, a setting screen, and the like. The operation unit also serves as the UI display unit 241, is operated by the user, and for example, receives various instructions from the user, such as an instruction to change a setting of the sign diagnosis unit 109 and an instruction to execute image sign diagnosis. The HDD unit 216 stores various types of setting information and image data required for image sign diagnosis. The various types of setting information and image data stored in the HDD unit 216 can be reused.

The stacker 110 controls whether the printed recording medium transported along the transport path is discharged to a stack tray, discharged to an escape tray, or transported to the finisher 111 connected downstream in the transport direction of the printed recording medium. The finisher 111 controls the transport and discharge of the printed recording medium, and performs finishing processing such as stapling, punching, or saddle stitching.

The external controller 102 includes a CPU 251, a memory 252, an HDD unit 253, a keyboard 256, a display unit 254, network I/Fs 255 and 257, and a video I/F 258. These devices are connected via a system bus 259 so as to be able to transmit and receive data to and from each other. The CPU 251 executes a program stored in the HDD unit 253 to control the overall operation of the external controller 102, such as reception of print data from the client PC 103, RIP processing, and transmission of the print data to the image forming apparatus 101. The memory 252 stores programs and data required when the CPU 251 performs various types of processing. The memory 252 operates as a work area for the CPU 251.

The HDD unit 253 stores various programs and data. The keyboard 256 is used for inputting operation instructions for the external controller 102 from the user. The display unit 254 is, for example, a display, and is used to display information about applications currently being executed in the external controller 102 and an operation screen. The network I/F 255 is connected to the client PC 103 via the external LAN 104, and is used for communicating data such as printing instructions. The network I/F 257 is connected to the printing unit 107 via the internal LAN 105, and is used for communication of data such as printing instructions. The external controller 102 is configured to be able to communicate with the printing unit 107, the sign diagnosis unit 109, the stacker 110, and the finisher 111 via the internal LAN 105 and the communication cable 260. The video I/F 258 is connected to the printing unit 107 via the video cable 106, and is used for communication of data such as image data (print data).

The client PC 103 includes a CPU 261, a memory 262, an HDD unit 263, a display unit 264, a keyboard 265, and a network I/F 266. These devices are connected via a system bus 269 so as to be able to transmit and receive data to and from each other. The CPU 261 executes programs stored in the HDD unit 263 to control the operation of each device via the system bus 269. This enables the client PC 103 to perform various types of processing. For example, the CPU 261 executes a document processing program stored in the HDD unit 263 to generate print data and issue a printing instruction. The memory 262 stores programs and data required when the CPU 261 performs various types of processing. The memory 262 operates as a work area for the CPU 261.

The HDD unit 263 stores, for example, various applications such as a word processing program, programs such as a printer driver, and various types of data. The display unit 264 is, for example, a display, and is used to display information about applications currently being executed in the client PC 103 and an operation screen. The keyboard 265 is used for inputting operation instructions for the client PC 103 from the user. The network I/F 266 is communicably connected to the external controller 102 via the external LAN 104. The CPU 261 communicates with the external controller 102 via the network I/F 266.

### Sign Diagnosis Processing

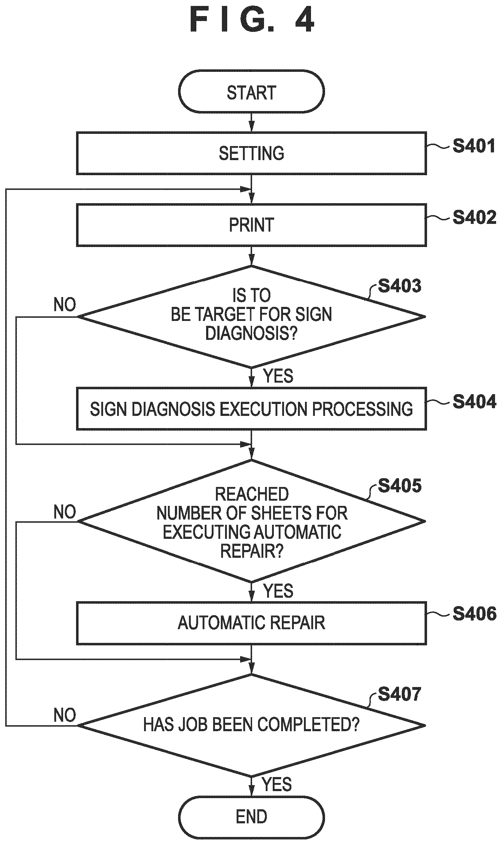

A processing procedure of sign diagnosis processing according to this embodiment will be described with reference to FIG. 4. Note that FIG. 4 shows the overall flow from the work before starting sign diagnosis, to executing sign diagnosis, and executing automatic repair. The symbol "S" in the description of the flowcharts represents a step. The same applies to the following description of the flowcharts. The processing described hereinafter is executed by the CPU 206 of the printing unit 107, the CPU 214 of the sign diagnosis unit 109, and the CPU 251 of the external controller 102. Here, a mode will be described in which various CPUs execute the processing described below in cooperation with each other, but it is also possible to use a mode in which a single integrated CPU provided in the image forming apparatus executes all of the processing.

In S401, the CPU 214 of the sign diagnosis unit 109 receives an instruction for sign diagnosis from a user or a service person via the UI display unit 241, which also serves as an operation unit, and checks the setting of the sign diagnosis processing. In this embodiment, a screen for receiving an instruction to start sign diagnosis is displayed on the UI display unit 241, and when an instruction to start is received, an image abnormality (image defect) of a predetermined level is set as the setting of the sign diagnosis. Note that the start instruction is not limited to the above example, and may be any instruction that indicates execution of sign diagnosis. For example, a job and execution of sign diagnosis may be associated with each other in advance, and when a job for executing sign diagnosis is received, it may be determined that an instruction to start sign diagnosis has been issued. Here, a mode will be described in which instructions are received via the UI display unit 241 of the sign diagnosis unit 109, but this is not intended to limit the present invention, and instructions may also be received from the client PC 103 via the external controller 102.

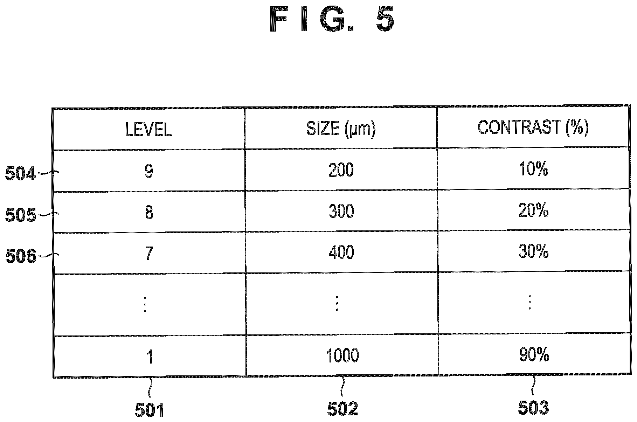

In this embodiment, sign diagnosis is set by classifying the predetermined levels at which an image defect is judged into nine levels based on the size and contrast of the image abnormality. Here, a case will be described in which a level at which an image defect is determined is selected according to user input. FIG. 5 shows an example of image abnormality levels. The image abnormality level 501 selected by the user as a criterion (predetermined level) for judging an image defect is set such that the image abnormality size 502 is larger and the contrast 503 is higher the lower the level is. On the other hand, the size 502 of the image abnormality is set smaller and the contrast 503 is set lower the higher the level is. Note that there is no intention to limit the setting of the image abnormality level to the above levels, and the image abnormality levels can be set as appropriate depending on the performance of the image forming apparatus and the like. Also, any level at which an image defect is judged may be used, and the setting may be made by selecting from only the size or only the contrast. Also, a method of setting a numerical value instead of a level may be used. When the confirmation of the setting for sign diagnosis is completed, the print job advances to print processing. As described above, according to this embodiment, levels of a plurality of image abnormalities are classified according to at least one of the size and the contrast of the abnormalities.

In S402, the CPU 206 of the printing unit 107 receives a print instruction from the client PC 103 or the external controller 102 and starts a print operation. Specifically, the CPU 251 of the external controller 102 performs PDL interpretation of the font type, size, designated position on a sheet, and the like of text based on the description in the PDF file according to the PDF print job received in S401. Next, the CPU 251 creates RIP data rasterized into a bitmap in accordance with the resolution setting as interpreted in the PDL interpretation in S402. The CPU 251 associates items for which feature extraction is possible from the RIP data. The items for which feature extraction is possible will be described in detail later.

The CPU 251 temporarily stores the created RIP data as a reference image in the HDD unit 253 of the external controller 102 in association with a diagnosable item. Thereafter, the reference image stored in the HDD unit 253 is sent to the sign diagnosis unit 109 and stored in the HDD unit 216 of the sign diagnosis unit 109. Furthermore, the CPU 251 transmits the RIP data from the video I/F 258 via the video cable 106 to the video I/F 205 of the printing unit 107. The CPU 206 of the printing unit 107 performs halftone processing on the RIP data received by the video I/F 205, and causes the print unit 203 to print the image data resulting from the halftone processing.

In S403, the CPU 214 of the sign diagnosis unit 109 determines whether or not the printed recording medium is to be set as a target for sign diagnosis. A sign gradually deteriorates the print quality as the number of printed sheets increases, and ultimately changes to an image defect, and therefore there is no need to perform sign diagnosis on every page. In view of this, the CPU 214 judges whether the printed recording medium is a recording medium that is a sign diagnosis target based on a judgment condition, or whether the recording medium is a recording medium that is not a sign diagnosis target. Details of the conditions for determining the sign diagnosis target will be described later. If it the printed recording medium is judged to be an image that is not a target of sign diagnosis (No), the processing advances to S402. On the other hand, if the printed recording medium is judged to be a recording medium that is a sign diagnosis target (Yes), the processing advances to S404.

In S404, the CPU 214 executes sign diagnosis, which will be described later, and stores the execution result in the HDD unit 216. In S405, the CPU 214 determines whether to execute automatic repair. In this embodiment, the timing of executing automatic repair is set to a predetermined number of sheets predicted by sign diagnosis, the number of printed sheets stored in the HDD unit 208 is read out, and automatic repair is executed when the number of printed sheets reaches the predetermined number of sheets. Details of the automatic repair to be executed and the number of sheets to be set as the timing of executing automatic repair will be described later. If the number of printed sheets is not the number of sheets for executing automatic repair (No), the processing advances to S407. If the number of printed sheets is the number of sheets for executing automatic repair (Yes), the processing advances to S406, and automatic repair is executed.

In S406, the CPU 214 causes the printing unit 107 to execute automatic repair in accordance with the sign diagnosis result stored in the HDD unit 216. After automatic repair is executed, the processing advances to S407. In S407, the CPU 206 of the printing unit 107 determines whether or not the job has been completed. If the job is continuing (No in S406), the processing advances to S402, and if the job has ended (Yes in S405), the processing of this flowchart ends.

### Items For Which Feature Extraction Is Possible

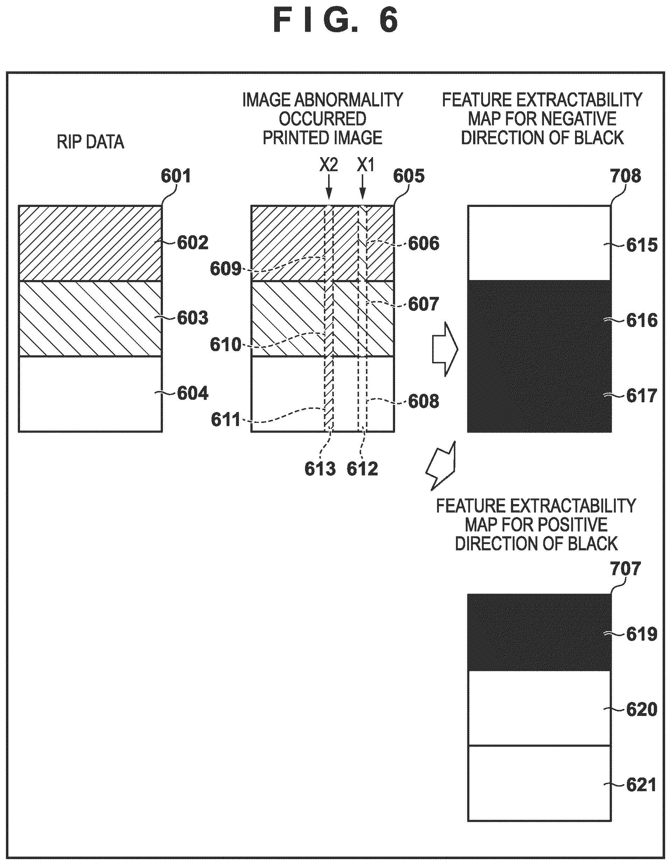

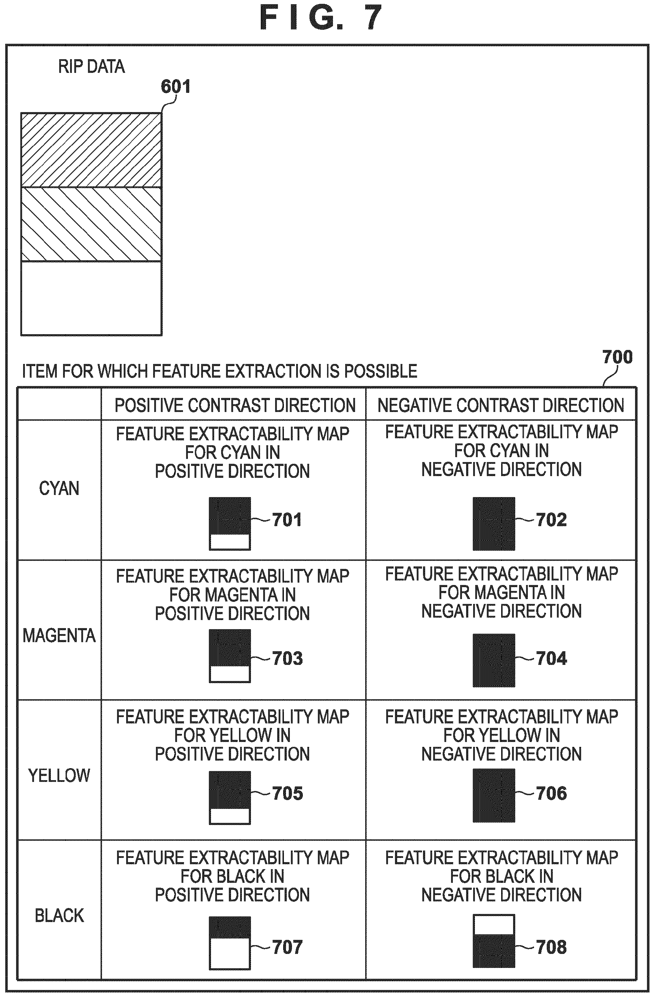

With reference to FIGS. 6 and 7, items for which feature extraction is possible according to this embodiment will be described. FIG. 6 shows how features are extracted according to this embodiment. FIG. 7 shows an example of a feature extractability map for each item for which feature extraction is possible. In this embodiment, the items for which feature extraction is possible are a total of eight items, consisting of four colors, namely cyan, magenta, yellow, and black, and two combinations for each color, namely an abnormality occurring in a darker direction (positive contrast direction) or abnormality occurring in a lighter direction (negative contrast direction). Reference numeral 700 denotes feature extractability maps (701 to 708) in which, for each item for which feature extraction is possible, a pixel for which feature extraction is possible is represented as 1, and a pixel for which feature extraction is not possible is represented as 0.

For example, a case is assumed in which an image abnormality occurs in an image 605 printed from RIP data 601 including a monochrome (black and white printing) region 602 with a high concentration of black, a region 603 with a low concentration of black, and a white region 604. If a vertical streak 612 in the negative contrast direction occurs at a main scanning position X1, the image abnormality becomes noticeable in a portion 606 with a high concentration of black, but an image abnormality does not become noticeable in a white portion 608 or a portion 607 with a low concentration of black. That is, for the feature of a negative contrast direction of black, the feature can be extracted at a location where the concentration of black is greater than or equal to a certain concentration. Accordingly, in a map 708 of the item for which feature extraction is possible in the negative contrast direction of black, pixels with a black concentration greater than 40% are set to 1, which is diagnosable (615), and all other pixels as 0 (616, 617) are stored as locations at which feature extraction is not possible.

Also, if a vertical streak 613 in the positive contrast direction of black occurs at a main scanning position X2, the vertical streak becomes noticeable in a white portion 611 and a portion 610 with a low concentration of black, but does not become noticeable in a portion 609 with a high concentration of black. That is, for the feature of a positive contrast direction of black, feature extraction is possible in the portion where the black concentration is less than or equal to a certain concentration. Accordingly, in a map 707 of an item for which feature extraction is possible in the positive contrast direction of black, pixels with a black concentration of 60% or less (620, 621) are set to 1, which is diagnosable, and other pixels are stored as 0 (619), as non-diagnosable regions.

In addition, with monochrome (black and white printing) RIP data 601, it is not possible to extract the features in the negative (blank page) direction of cyan, magenta, and yellow. Accordingly, in the case of monochrome RIP data, the feature extractability maps 702, 704, and 706 are stored assuming that the negative contrast directions of cyan, magenta, and yellow are items for which feature extraction is not possible. Also, the feature extractability maps 701, 703, and 705 are stored assuming that feature extraction for cyan, magenta, and yellow in the positive direction is possible only in the white region 604 where there is no black.

Note that the diagnosable items are not limited to the above-mentioned color and contrast direction, but may also be set by area or flatness. Furthermore, any method by which it is possible to determine a possible region for a feature extraction item may be used, and there is no limitation on the shape of the map. For example, instead of performing determination for each pixel, the RIP data may be divided into a plurality of blocks, and a setting may be made as to whether or not each block is diagnosable.

### S404: Sign Diagnosis Execution Processing

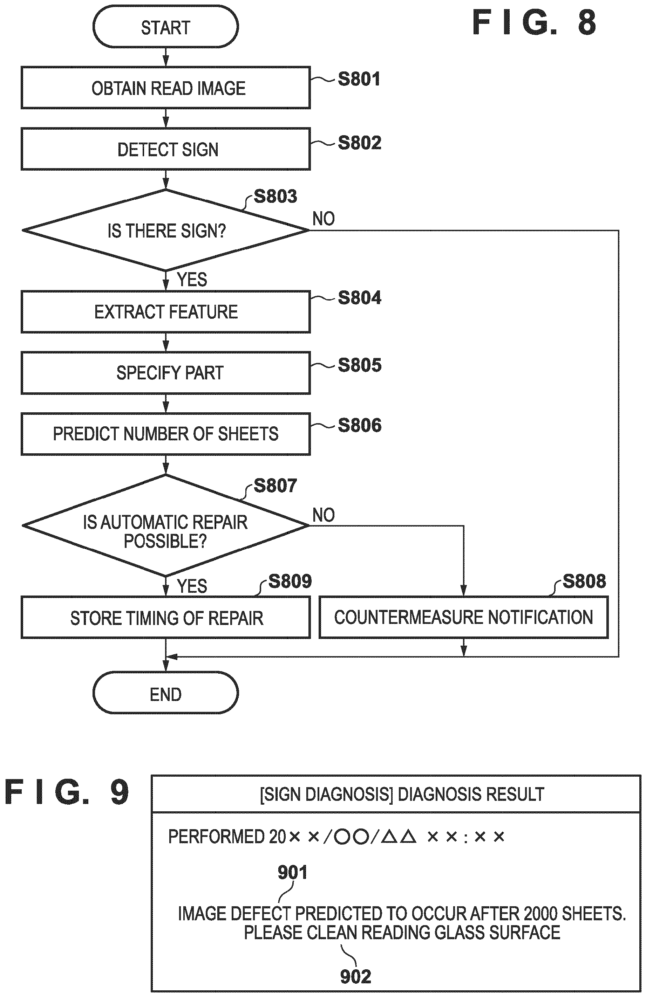

The sign diagnosis processing in S404 according to this embodiment will be described in detail with reference to FIG. 8. FIG. 8 is a flowchart showing a procedure of the image sign diagnosis processing executed by the sign diagnosis unit 109. The processing described hereinafter is executed by the CPU 214 of the sign diagnosis unit 109. Note that the processing may be executed by the CPU 206 of the printing unit 107 or the CPU 251 of the external controller 102, or by cooperation between these CPUs.

In S801, the CPU 214 executes processing for reading a recording medium that is a sign diagnosis target by the image reading units 331 and 332. The read image of the recording medium that is a determination target is stored in the HDD unit 216 of the sign diagnosis unit 109 as a target image for sign diagnosis. When the target image for sign diagnosis is stored, the processing advances to S802. In S802, the CPU 214 performs sign detection by comparing a reference image with a target image for sign diagnosis in order to determine a sign of abnormality in the printing unit 107. In this embodiment, the reference image and the target image for sign diagnosis are compared to obtain a difference value. Also, the sign diagnosis unit 109 may include a correction unit that corrects non-linearity between a signal value and luminance of the target image for sign diagnosis acquired by the image reading unit 331, and may acquire difference image data after correcting the signal value of the sign diagnosis image.

If the acquired difference value exceeds a threshold value, the sign diagnosis unit 109 determines that there is a difference and sets 1 for the difference image data. On the other hand, if the difference value falls below the threshold value, 0 is set for the difference image data. In this embodiment, the threshold value is set to a value that is smaller in size and lower in contrast than the level set in S401. For example, if level 7 (510: size 400 µm, contrast 30%) is set as an image defect in S401, level 9 (504: size 200 µm, contrast 10%) is set as the detection threshold value. The sign diagnosis unit 109 stores the difference image data, which is binary data indicating whether or not there is a difference, in the HDD unit 216, and the processing advances to S803.

When the creation of the difference image data is completed, in S803, the CPU 214 determines whether or not a sign has occurred. The determination is performed based on whether or not data including 1 is present in the difference image data. If the determination result indicates that a sign has not occurred (No in S803), the CPU 214 ends the processing of this flowchart. On the other hand, if the determination result indicates that a sign has occurred (the difference image data includes 1) (Yes in S803), the CPU 214 advances the processing to S804.

In S804, the CPU 214 extracts a feature amount for specifying a part in which a sign of abnormality has occurred in the printing unit 107 from the target image data for sign diagnosis, the difference image data, and the diagnosable items associated with the reference image. The CPU 214 extracts the feature of the difference from the target image for sign diagnosis and the diagnosable items corresponding to the difference region determined as "having a difference", which is acquired from the difference image data in S802. In this feature extraction processing, for example, color material information and contrast information are acquired from the difference image according to the diagnosable items. The color material information is information indicating in which color of yellow, magenta, cyan, or black the sign has occurred. The contrast information is information that expresses, by a positive or negative numerical value, whether the contrast of the sign is in the positive contrast direction or the negative contrast direction. Here, a color, a positive contrast direction, or a negative contrast direction that is not set as a diagnosable item determined based on the RIP data is not extracted as a feature by the CPU 214.

Furthermore, the CPU 214 acquires size information such as the width (size in the main scanning direction) and height (size in the sub-scanning direction) of the sign, and shape information of the sign such as the shapes of spots (dots), vertical streaks, and horizontal streaks. In this embodiment, an example will be described in which the shape information is determined based on an aspect ratio between the width and height in the acquired size information. Specifically, if the aspect ratio calculated by dividing the width by the height exceeds a predetermined threshold value, the shape is determined to be a horizontal streak. If the aspect ratio is less than or equal to the threshold value, the shape is determined to be a vertical streak, and if it does not fit either category, it is determined to be a spot. Note that the method for acquiring shape information is not limited to the above example, and any method can be used as long as it can be used to specify the shape of the sign, such as whether it is a spot, horizontal stripe, or vertical stripe. For example, a shape whose width is greater than or equal to a threshold value may be determined as a horizontal streak, a shape whose height is greater than or equal to a threshold value may be determined as a vertical streak, and anything other than that may be determined as a spot. Other examples of features include coordinate information indicating a position in a direction perpendicular to the transport direction of the recording medium within the printing unit 107, and period information indicating that signs with similar features occur periodically in the transport direction of the recording medium within the printing unit 107.

In S805, the CPU 214 specifies the part that is the causal factor of the sign out of the printing unit 107 or the image reading unit 331 based on the feature information of the difference region obtained in S804. In the difference region, a combination that has the same color and has a high degree of similarity is selected, and it is possible to specify which part the sign has occurred in based on the period information of the selected combination. In this embodiment, a case will be described in which a combination with a high degree of similarity is determined with a known template matching technique.

The images of the signs are compared using template matching, and the highest value is set as the degree of similarity between the signs. A combination of signs with an acquired degree of similarity greater than or equal to a predetermined threshold is determined as having a high degree of similarity. Note that the method for determining similarity is not limited to the above, and any method for determining whether or not signs are similar to each other may be used. For example, a method of determining the similarity between images using machine learning or a method of acquiring the degree of similarity by comparing the feature amounts or feature points of sign images may be applied. The CPU 214 reads out the current number of printed sheets stored in the HDD unit 208, associates the extracted feature with the part where the sign occurred, stores the associated information in the HDD unit 216, and advances to S806.

In S806, the CPU 214 predicts the number of printed sheets at which an image defect will occur based on the part that is a causal factor specified in S805, the size and contrast of the sign, past sign feature information stored in the HDD unit 216, and a deterioration degree table for each part. The prediction method will be described in detail later. The CPU 214 stores the predicted number of printed sheets in the HDD unit 216, and the processing advances to S807.

In S807, the CPU 214 determines whether or not automatic repair is possible. Cases where automatic repair is not possible include responses that require a user operation, such as cleaning dirt from reading glass surfaces of the image reading units 331 and 332 of the sign diagnosis unit 109 or adjusting the recording medium to be used, and responses that require operation by a service technician, such as replacing a part. In addition, cases where automatic repair is not possible include responses to reading abnormalities in the image reading unit, and responses to fibers, foreign matter, or the like in the recording medium before image formation. If automatic repair is not possible, the processing moves to S808.

On the other hand, an item that can be automatically repaired is one that involves a response in which automatic restoration can be performed by the printing unit 107, such as cleaning the wires and grids of the corona chargers of the photosensitive drums provided in the image forming stations 304 to 307 of the printing unit 107 using a charger cleaning mechanism (not shown). If automatic repair is possible, the processing moves to S809.

In S808, the CPU 214 displays, on the UI display unit 241 of the sign diagnosis unit 109, that an action is required because automatic repair is not possible, and ends the processing of this flowchart. FIG. 9 shows an example of how the diagnosis result is displayed when an action is required. In the result display, the current number of printed sheets is subtracted from the number of printed sheets at which the occurrence of an image defect is predicted, which is stored in the HDD unit 216, so as to display the number of remaining sheets before an image defect will occur, as indicated by reference numeral 901. Based on the diagnosis result, a necessary measure 902 such as "cleaning the reading glass surface" and "notifying a service technician" are also displayed. Note that the notification of action is not limited to the above, and any method that allows the user to check the result may be used. The diagnosis result screen may be displayed on the display unit 264 of the client PC 103, the display unit 254 of the external controller 102, or the UI display unit 225 of the printing unit 107. The notification content may also be displayed by displaying whether or not a sign was detected along with detailed information, or may be displayed in chronological order or alongside images.

On the other hand, in step S809, the CPU 214 stores, in the HDD unit 216, the content of the automatic repair in association with the number of sheets until an image defect, which is stored in the HDD unit 216, and ends the processing of this flowchart. For example, if a sign has occurred in the corona charger of the photosensitive drum, cleaning of the wire of the corona charger is stored as the content of the automatic repair.

### Setting of Determination Condition for Sign Diagnosis Target

A condition for determining whether or not a printed recording medium is a sign diagnosis target in S403 of FIG. 4 will be described. Since the print quality of the sign gradually deteriorates to an image defect as the number of printed sheets increases, it is not necessary to perform sign diagnosis on every page. For this reason, in this embodiment, the timing of performing sign diagnosis is determined. For example, when a sign diagnosis counted sheet number stored in the HDD unit 216 reaches a predetermined number of printed sheets, such as every 200 sheets, the image is determined as a sign diagnosis target. If it is determined that the image is not a sign diagnosis target (No in S403), the sign diagnosis counted sheet number is incremented by one and stored in the HDD unit 216, and the count increases to the number of sheets that is the sign diagnosis target condition. If the number of sheets at which a sign diagnosis target is determined is equal to the sign diagnosis counted sheet number, sign diagnosis processing S404 is executed, and when the processing ends, the sign diagnosis counted sheet number is reset (set to 0) and stored in the HDD unit 216. Note that the number of sheets that is the determination condition for a sign diagnosis target is not limited to a predetermined number, and may be a number of sheets set by the user. Furthermore, the determination condition for a sign diagnosis target is not intended to be limited to the number of printed sheets, and may be any determination condition that allows a sign to be tracked without reducing productivity, and may be such that, for example, when the diagnosis result of sign diagnosis is acquired, the next sign diagnosis is started. This is effective in the case where the execution time of sign diagnosis processing is longer than the printing time on one sheet of the recording medium.

### Image Defect Prediction Sheet Count

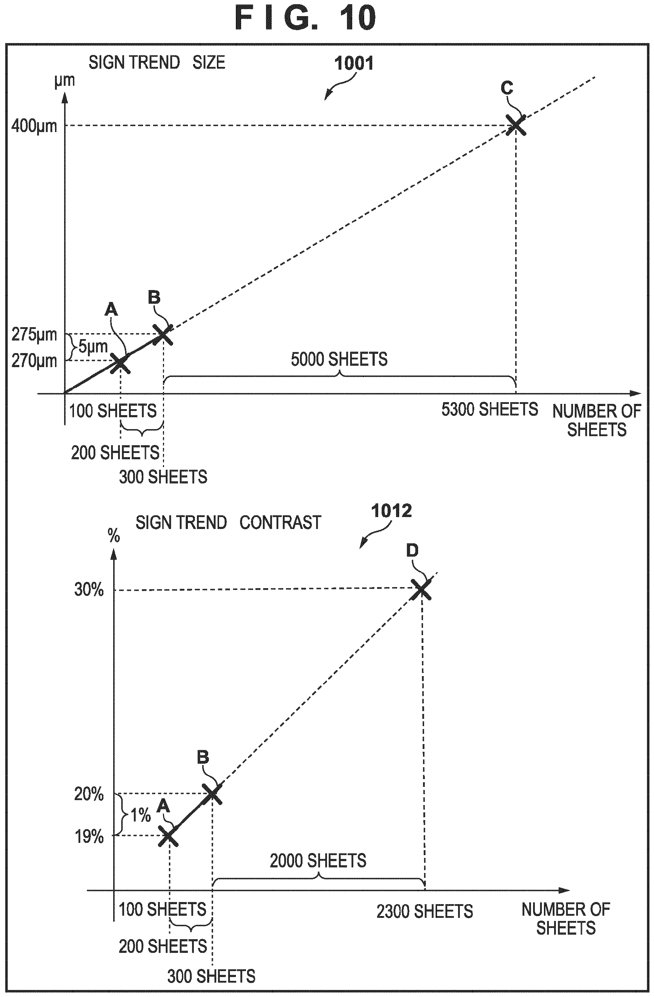

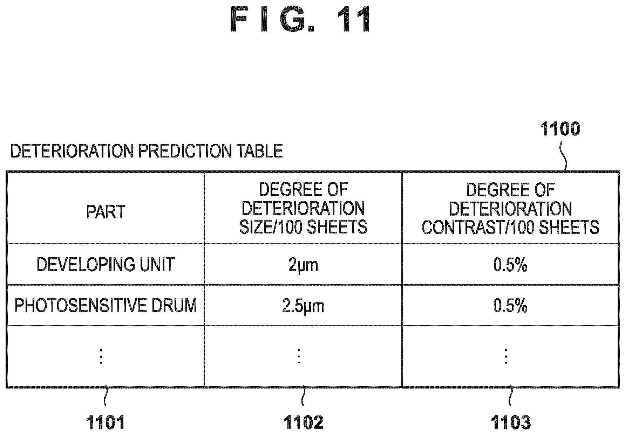

Prediction of the number of printed sheets that will result in an image defect in S806 will be described with reference to FIGS. 10 and 11. In this embodiment, the sign diagnosis unit 109 predicts the number of printed sheets that will result in an image defect based on the size and contrast information of the sign at the same part that was stored in the HDD unit 216 during a previous sign diagnosis. Here, a method for predicting the number of sheets at which an image defect will occur based on the trend of the size and contrast of an occurring sign will be described. In 1001, the vertical axis indicates the size of the sign, and the horizontal axis indicates the number of printed sheets. In 1012, the vertical axis indicates the contrast of the sign, and the horizontal axis indicates the number of printed sheets.

For example, as shown in FIG. 10, it is assumed that the current sign diagnosis result is that the number of printed sheets is 300, sign B of the black drum has occurred, the size is 275 µm, and the contrast is 20%. If the information of sign A, which had a size of 270 µm and a contrast of 19%, was stored at 100 printed sheets in a past sign diagnosis, the size has deteriorated by 5 µm and the contrast by 1% after 200 printed sheets. The predicted number of sheets at which an image defect occurs when the deterioration is proportional to the number of printed sheets will be described below.

If the image abnormality level set in S401 is level 7 (506), a size of 400 µm and a contrast of 30% are the criteria for determining an image defect. Accordingly, from the perspective of size, based on 1001, it can be predicted that the sign B will deteriorate to an image defect C in the next 5000 sheets, and from the perspective of contrast, based on 1012, it can be predicted that the sign B will deteriorate to an image defect D in the next 2000 sheets. When determining the predicted number of sheets at which either the size or the contrast will reach the level of an image defect (level 7), the contrast will be determined to be an image defect after 2000 sheets, and the predicted number of sheets will be less than the 5000 sheets predicted from the perspective of size. Accordingly, as the result of the prediction until an image defect is reached, it is determined that there are 2000 more sheets. Accordingly, since the current number of printed sheets is 300, it can be predicted that there is a possibility that the image quality will deteriorate to the image abnormality level at 2300 printed sheets, which is 2000 sheets later. The CPU 214 stores the result of predicting the number of printed sheets that will result in an image defect in the HDD unit 216 in S806, and the processing advances to S807.

Also, the number of sheets and the deterioration rate, which indicate the degree of deterioration for each part with respect to size and contrast, may be stored in advance, and the predicted number of sheets may be acquired by referring to these. A case will be described where a deterioration prediction table for each part is stored in advance. FIG. 11 shows an example of a deterioration prediction table 1100. A deterioration prediction table 1100 stores information on how much a size 1102 and a contrast 1103 will deteriorate per 100 sheets for parts 1101.

For example, a case will be described in which a sign with a size of 275 µm and a contrast of 20% occurs on a black drum, and level 7 (506) is set as the image defect level. In this case, when the size of the image defect level is 400 µm and the contrast deteriorates to 30%, the size is 400 µm - 275 µm = 125 µm and the contrast deteriorates by 30%-20%=10%. In the photosensitive drum, the size deteriorates by 2.5 µm per 100 sheets, and the contrast deteriorates by 0.5%. Accordingly, the number of sheets until an image defect occurs is 125 µm ÷ 2.5 µm × 100 sheets = 5000 sheets from the perspective of size, and 10% ÷ 0.5% × 100 sheets = 2000 sheets from the perspective of contrast. When judging the predicted number of sheets at which either the size or the contrast reaches the image defect level, it can be judged that the image defect level will be reached after 2000 sheets, as in FIG. 10. That is, if the current number of printed sheets is 300, it can be predicted that the image defect level will be reached when the number of printed sheets reaches 2300 sheets, which is 2000 sheets later. Note that the method of prediction need only be able to predict how many more sheets until reaching the image defect level based on the detected sign. It is possible to perform prediction based on not only one past instance but also the trend in a plurality of past instances. A method may also be used in which the sign image, feature amount, and image abnormality level are input and machine learning is used to predict how many more sheets until an image defect occurs.

As described above, the diagnostic apparatus according to this embodiment determines whether or not to execute sign diagnosis processing for detecting a sign of abnormality in the image forming apparatus when an image is formed on a recording medium by an image forming unit (printing unit). Also, if it is determined that sign diagnosis processing is to be executed, the diagnostic apparatus executes the sign diagnosis processing on the read image obtained by the reading unit reading the image formed by the image forming unit, and when a sign of abnormality is detected, the diagnostic apparatus performs automatic repair of the image forming unit before the sign of abnormality becomes an abnormality of a predetermined level. In this way, according to this embodiment, by determining whether an image on a printed recording medium is a target image for sign diagnosis and then performing sign diagnosis, it is possible to perform sign diagnosis with a reduced processing load without reducing productivity. That is, this embodiment provides a mechanism for appropriately performing diagnosis of a sign of abnormality in an image forming apparatus while suppressing the processing load.

### First Variation

The present invention is not limited to the above-described embodiment, and various variations are possible. A first variation of the above-described first embodiment will be described hereinafter. In the above-described first embodiment, an example was described in which it is determined whether or not a printed recording medium is a recording medium that is a sign diagnosis target in sign diagnosis execution determination (S403), and the recording medium that is a sign diagnosis target is read in S802 in sign diagnosis execution (S404). However, it is also possible to use a configuration in which, after a printed recording medium is read, it is determined whether or not the read image is a target image for sign diagnosis.

### Sign Diagnosis Processing

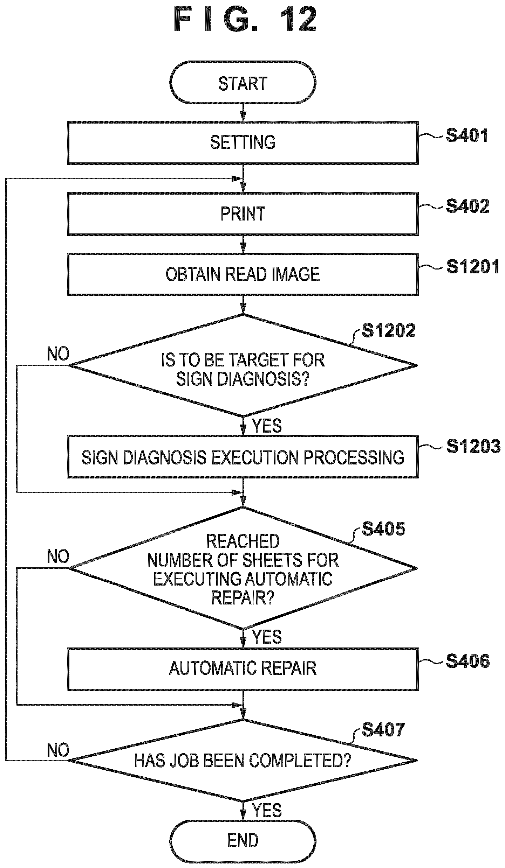

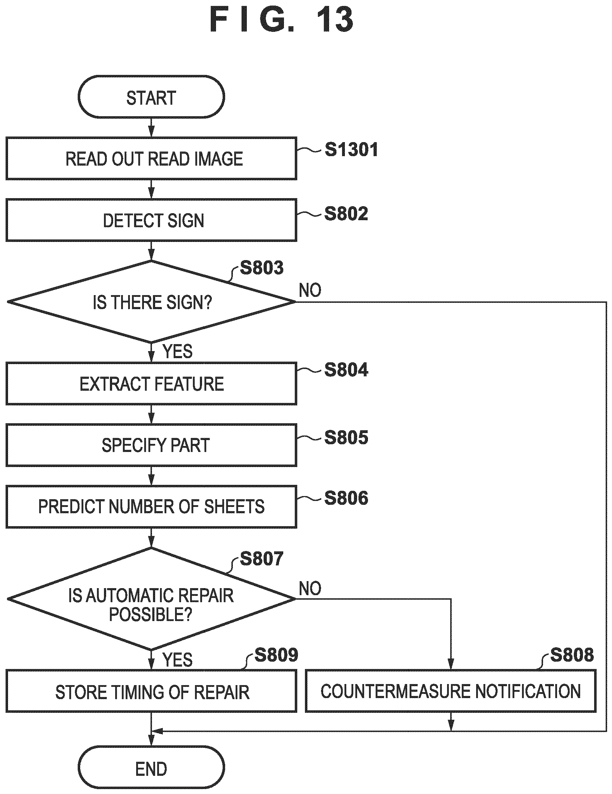

A procedure of sign diagnosis processing in this variation will be described with reference to FIGS. 12 and 13. In the present first variation, it is determined whether or not a read image is a target image for sign diagnosis, and then sign diagnosis is executed. Processing that is the same as that in the flowchart of FIG. 4 is designated by the same step numbers, and description thereof is omitted. The processing described hereinafter is executed by the CPU 206 of the printing unit 107, the CPU 214 of the sign diagnosis unit 109, and the CPU 251 of the external controller 102. Here, a mode will be described in which various CPUs cooperate to execute the processing described hereinafter, but it is also possible to use a mode in which a single integrated CPU provided in the image forming apparatus executes all of the processing.

When printing is executed in S402, the CPU 214 of the sign diagnosis unit 109 executes processing for reading the printed recording medium in S 1201. The read image is stored in the HDD unit 216 of the sign diagnosis unit 109. When the read image is stored, the processing advances to S1202. In S1202, the CPU 214 determines whether or not the read image is a target for sign diagnosis. Specifically, the CPU 214 judges whether or not the read image is a target image for sign diagnosis based on the determination condition for a sign diagnosis target. If it is a target for sign diagnosis (Yes in S1202), the processing advances to S1203, and if it is not a target for sign diagnosis (No in S1202), the processing advances to S405.

The detailed processing procedure of the sign diagnosis execution processing (S1203) will be described with reference to FIG. 13. The processing described hereinafter is executed by the CPU 214 of the sign diagnosis unit 109, for example. Note that the processing may be executed by the CPU 206 of the printing unit 107 or the CPU 251 of the external controller 102, or in cooperation with these CPUs. Processing that is the same as that in the flowchart of FIG. 8 is denoted by the same step numbers, and description thereof is omitted.

In S1301, the CPU 214 of the sign diagnosis unit 109 reads out the read image stored in the HDD unit 216 in S1201 as a target image for sign diagnosis. In S802, the CPU 214 executes sign diagnosis processing using the read-out target image. The subsequent processing is the same as that in the flowchart of FIG. 8, and therefore description thereof is omitted.

### Second Variation

Next, a second variation of the above-described first embodiment will be described. In the above-described first embodiment, an example was described in which the set number of sheets is used as the determination condition for the sign diagnosis target. However, the determination condition for the sign diagnosis target in the present invention is not intended to be limited to the above description. Here, an example will be described in which the determination condition for the sign diagnosis target is not a set number of sheets.

If a previously-detected sign is close to the level of an image defect, it is possible to make a more accurate prediction by setting the timing of sign diagnosis to an earlier time and updating the sign trends 1001 and 1012 more precisely. For this purpose, the number of sheets, which is the determination condition for the sign diagnosis target, may be reduced according to the size or contrast of a previously-detected sign. By setting the timing of sign diagnosis to an earlier time and updating the sign trends 1001 and 1012 more precisely, a prediction can be made with higher accuracy. For example, if the number of sheets until reaching the image defect level predicted in S807 is close to the image defect level, such as 300 sheets remaining, in this variation, the next sign diagnosis is changed from 200 sheets remaining to 50 sheets remaining and diagnosis is performed, whereby a prediction is made with high accuracy.

Also, if the speed of deterioration until becoming an image defect is known in advance based on the sign, the timing of sign diagnosis may be changed according to the type of the detected sign. Specifically, in the deterioration prediction table 1100 shown in FIG. 11, when a sign of a part with a fast deterioration speed is detected, the number of sheets that is the determination condition for the sign diagnosis target may be reduced, and the timing of the sign diagnosis may be set to an earlier time to track the sign. For example, the degree of size deterioration of the developing unit per 100 sheets is 2 µm, whereas the degree of size deterioration of the photosensitive drum per 100 sheets is 2.5 µm, which is larger and therefore tends to deteriorate more quickly. For this reason, if a sign of the photoconductor drum is detected, the number of sheets that is the determination condition for a sign diagnosis target is reduced and the timing of sign tracking (sign diagnosis) is set to an earlier time, thereby enabling diagnosis according to the degree of deterioration of the sign.

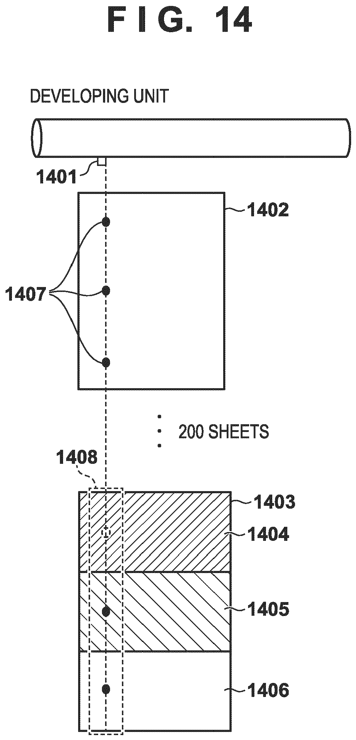

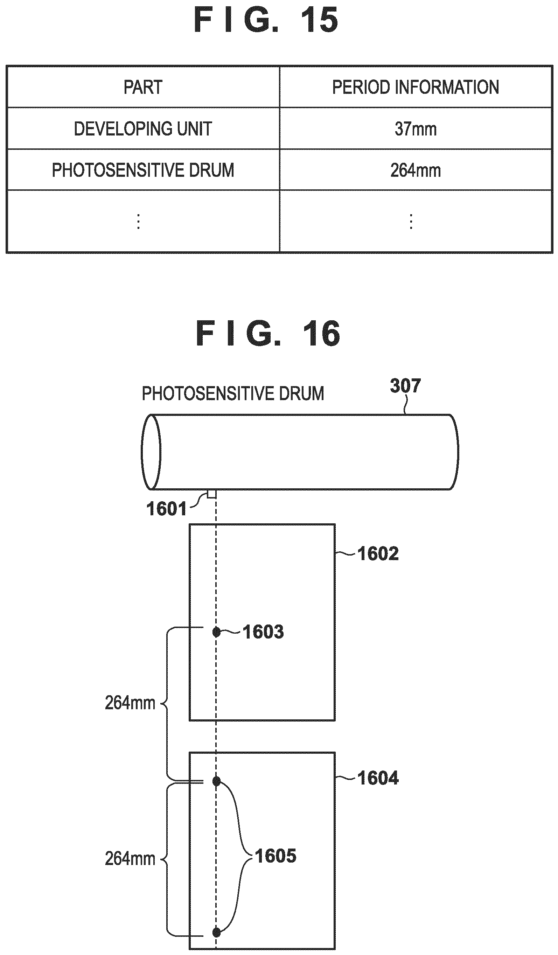

Furthermore, the determination condition for the sign diagnosis target need not be an entire page, but a portion of a page, such as a range limited by the main scanning position or a range in which feature extraction is possible for an item for which feature extraction is possible, may be set as the range of the diagnosis target. A sign has the feature of occurring periodically at the same main scanning position and in the same color as the part where the sign occurs. An example of occurring at the same main scanning position is shown in FIG. 14. For example, it is assumed that a period correspondence table in which parts correspond to period information is prepared in advance. FIG. 15 shows an example of a period correspondence table.

It is assumed that a scratch has occurred at a main scanning position 1401 in the developing unit, and a periodic sign 1407 is detected in a target image 1402 for sign diagnosis. The signs occur at a main scanning position corresponding to the position 1401 at a period of 37 mm. In the target image 1403 for sign diagnosis after 200 sheets obtained by printing the RIP data 601, a sign occurs in the same range 1408 of the main scanning position. Accordingly, a range 1408 narrowed down by the main scanning position may be used as the determination condition for the sign diagnosis target instead of the entire image. In the target image 1403, the feature extractability map 707 for the positive direction of black shows that feature extraction is not possible for an abnormality in the positive direction of black in the region 1404, and is possible only in the regions 1405 and 1406. Thus, a feature-extractable area of the map of the item for which feature extraction is possible may be used as the determination condition for the sign diagnosis target.

Note that these conditions may be combined such that the "number of sheets" and the "region in which feature extraction is possible for an item for which feature extraction is possible" are set as conditions. For example, the conditions for the sign diagnosis target are that the set number of sheets is 200 and that the period occurrence position is a location where feature extraction is possible for an item for which feature extraction is possible. When the sign count sheet number reaches 200, if the period occurrence position is a region where feature extraction is not possible for an item for which feature extraction is possible, it is determined to be a non-sign diagnosis target (No in S403), the sign count sheet number is not changed, and subsequent processing is moved to. The sign count sheet number for the next page is also 200, which is equal to the set number of sheets, and therefore, it is determined whether or not the image is a sign diagnosis target by determining whether feature extraction is possible at the period occurrence position for an item for which feature extraction is possible. The subsequent processing is similar to that in the above-described embodiment, and therefore description thereof is omitted.

### Second Embodiment

A second embodiment of the present invention will be described hereinafter. In the above-described first embodiment, a single target image for sign diagnosis was used to perform sign diagnosis, whereas in the present embodiment, an example will be described in which sign diagnosis is performed based on a plurality of consecutive target images for sign diagnosis. In the above-described first embodiment, when performing sign diagnosis processing, the part in which the sign occurs is specified using the feature of the sign detected based on one target image for sign diagnosis. However, depending on the part, a sign may occur periodically across a plurality of pages. For example, when parts and period information correspond to each other as shown in FIG. 15, an example in which a sign is generated periodically across a plurality of pages is shown in FIG. 16.

In the example of FIG. 16, when printing is performed on an A3 recording medium with a length of 420 mm in the transport direction, the period of the developing unit is 37 mm, and therefore a plurality of signs occur periodically in the transport direction on one sheet. However, since the period of the photoconductor drum 307 is 264 mm, only one sign 1603 occurs on one page 1602, and therefore the periodic feature may not be extractable in feature extraction S805. A periodic sign 1605 occurs on the next page 1604 as well, and therefore if 1603 and 1605 are included, a periodic feature can be extracted in feature extraction S805. Accordingly, in this embodiment, a case will be described in which, instead of a single page 1602, consecutive pages such as 1602 and 1604 are used as diagnosis target images to perform feature extraction of the sign.

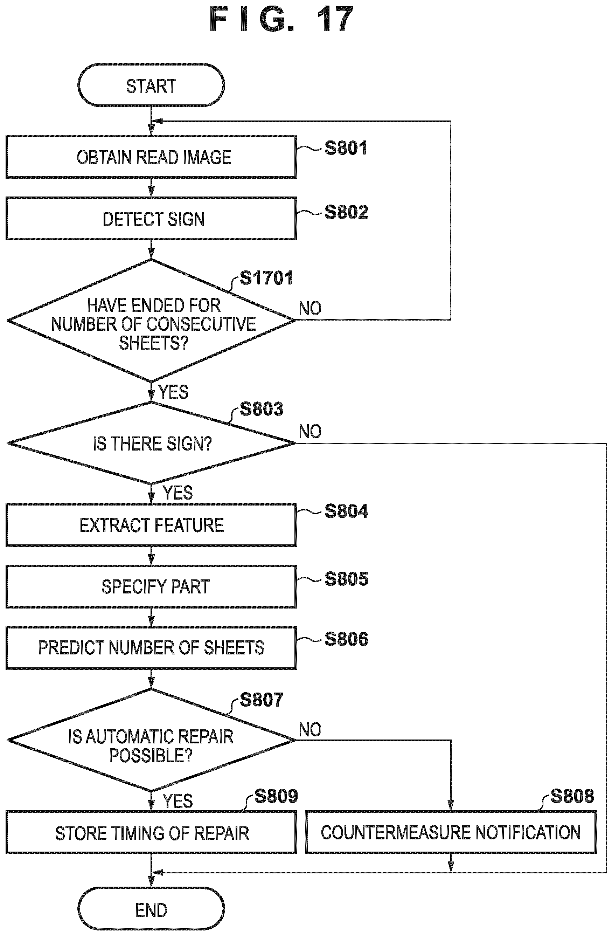

A detailed processing procedure of sign diagnosis execution processing in S404 in this embodiment will be described with reference to FIG. 17. The processing described hereinafter is executed by the CPU 214 of the sign diagnosis unit 109, for example. Note that the processing may also be executed by the CPU 206 of the printing unit 107 or the CPU 251 of the external controller 102, or in cooperation with these CPUs. Processing that is the same as that in the flowchart of FIG. 8 is denoted by the same step numbers, and description thereof is omitted.

First, in sign diagnosis target determination S403, the CPU 214 determines that a set number of consecutive sheets is to be the sign diagnosis target instead of one sheet. In this embodiment, a case will be described in which the number of consecutive sheets is set to 5, and the number of sheets that is the determination condition for the sign diagnosis target is set such that sign diagnosis is executed every 100 sheets. The determination condition for the sign diagnosis target is such that sign diagnosis is executed on 5 consecutive sheets every 100 sheets. That is, not only sign count sheet number 100 stored in the HDD unit 216, but also the 100th to 104th consecutive sheets are determined as diagnosis target images.

When a sign is detected in S802, the CPU 214 determines in S1701 whether or not the sign detection processing S802 for the specified number of consecutive sheets, namely 5 sheets, has ended. If it has ended (Yes in S1701), the processing advances to S803, and if the sign detection processing S802 has not ended for all consecutive sign target images (No in S1701), the processing returns to S801.

In S803, the CPU 214 determines whether a sign has occurred. If a sign has occurred (Yes in S803), the processing moves to S1702. If no sign has occurred (No in S803), the processing of this flowchart ends.

In S1702, if a sign has occurred, the CPU 214 extracts the feature of the sign. In this embodiment, extraction of a periodic feature will be described, which is different from the first embodiment. The CPU 214 extracts a periodic feature based on the coordinates of the sign and the consecutiveness of printing. Specifically, when a sign that is similar to a certain sign is present not only within a page but also in a subsequent page at a location corresponding to a period in the transport direction, the signs are determined to have a periodic feature. When extraction of the feature of all signs including period information is completed, the processing moves to S805.

As described above, the diagnostic apparatus according to this embodiment performs diagnosis using images formed consecutively on a plurality of recording media as images that are diagnosis targets. In this way, by performing sign diagnosis using a plurality of consecutive diagnosis target images instead of a single diagnosis target image, it is possible to perform diagnosis of a sign also for a part where signs occur periodically across a plurality of images.

### Third Embodiment

A third embodiment of the present invention will be described hereinafter. In this embodiment, a case will be described in which sign diagnosis is performed in conjunction with an inspection system. This embodiment can be realized in combination with the above-described first and second embodiments, but the effects of the present invention are not limited to the examples of the first and second embodiments. For example, in conjunction with an inspection system that detects abnormalities in a read image of printed material, a portion of the read image to be inspected by the inspection system may be used as a sign diagnosis image to perform sign diagnosis. In this embodiment, an example will be described in which the inspection system is executed in parallel with sign diagnosis processing by the CPU 214 of the sign diagnosis unit 109, and the sign diagnosis processing is executed using a portion of the read image read by the image reading units 331 and 332.

### Sign Diagnosis Processing

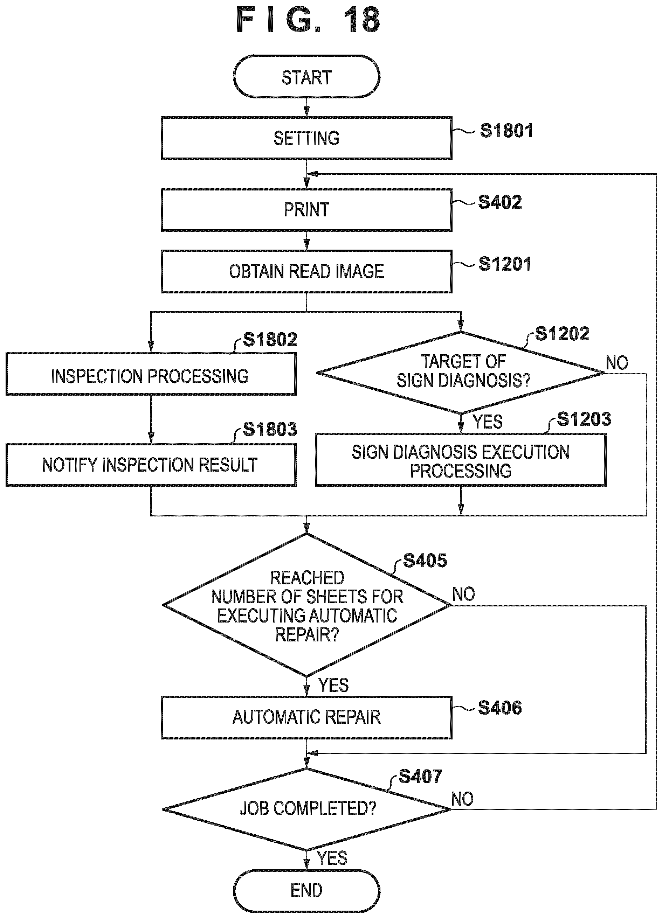

The detailed processing procedure of sign diagnosis processing in this embodiment will be described with reference to FIG. 18. The configuration of the printing system according to this embodiment and the flow of the sign diagnosis processing are the same as those in the first embodiment, and therefore description thereof is omitted. The same processing as that in the flowcharts of FIG. 4 and FIG. 12 is denoted by the same reference numerals and description thereof is omitted. The processing described hereinafter is executed by the CPU 206 of the printing unit 107, the CPU 214 of the sign diagnosis unit 109, and the CPU 251 of the external controller 102. Here, a mode will be described in which various CPUs execute the processing described below in cooperation with each other, but it is also possible to use a mode in which a single integrated CPU provided in the image forming apparatus executes all of the processing.

In S1801, the CPU 214 of the sign diagnosis unit 109 sets an image defect level. In this embodiment, image abnormalities at the image defect level are detected as failing inspection, image abnormalities that pass inspection (do not reach the image defect level) are treated as signs, and a location where a sign occurs is subjected to diagnosis. Specifically, a case will be described in which level 7 (510: size 300 µm, contrast 30%) of the nine levels of abnormality in FIG. 5 is set as the image defect level. In this case, the sign is detected at level 9 (504: size 100 µm, contrast 10%), which is smaller in size and lower in contrast than the image defect level. Note that the setting of the sign level for detecting an image defect is not limited to level setting. Any method may be used as long as the method can be used to set a degree of deterioration that is not acceptable to the user as an image defect, and a method of specifying a numeric value or a method of selecting an image may be used.

When a read image is acquired in S1201, in parallel with the sign diagnosis processing in S1202 and S1203, the CPU 214 executes inspection processing in S 1802 for detecting an image defect using the read image acquired in S1201. Specifically, the CPU 214 reads out the read image acquired in S1201 from the HDD unit 216, and detects an image abnormality at the image defect level set in S 1801.

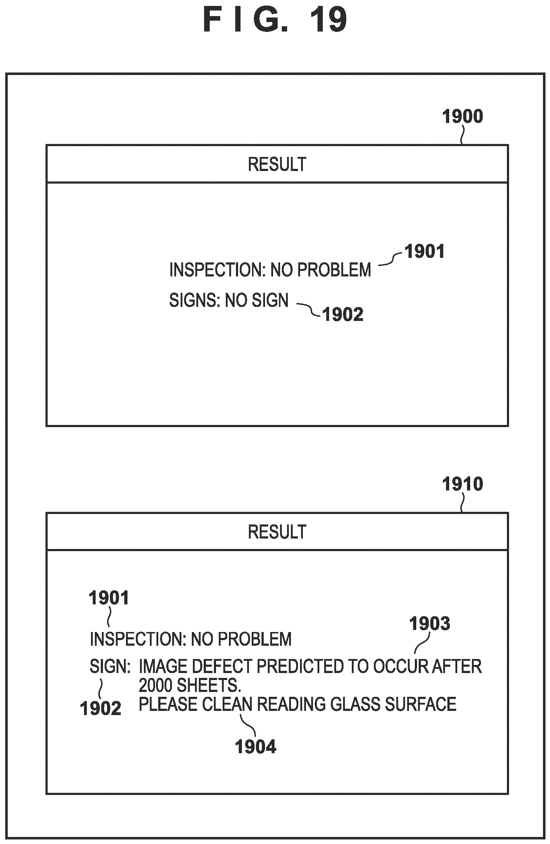

Next, in S1803, the CPU 214 displays the inspection result on the UI display unit 241 of the sign diagnosis unit 109. FIG. 19 is an example of an image displaying the results of the inspection processing and the sign diagnosis processing. If an image defect is detected, the CPU 214 displays this in the inspection result 1901 on the UI display unit 241 of the sign diagnosis unit 109, and if no image defect is detected, the CPU 214 displays "no problem" in the inspection result 1901 on the UI display unit 241, as shown in the result screen 1900. When notification of the detection result is performed, the processing advances to S405.

In parallel, in S1202, the CPU 214 determines whether the read image used in the inspection processing in S 1802 is a target image for sign diagnosis. If it is determined that the read image is a sign diagnosis target, the processing moves to S1203 where the signal diagnosis processing is executed. On the other hand, if it is determined that the read image is a non-sign diagnosis target, the processing moves to S405. In S1203, the CPU 214 executes sign diagnosis execution processing on the target image for sign diagnosis, and displays an execution result screen 1910 of the sign diagnosis processing on the UI display unit 241 alongside the sign diagnosis result 1902 and the result 1901 of the inspection processing. In this embodiment, if there is no sign (No in S803), "no sign" is displayed on the UI display unit 241, and then the processing moves. If there is a sign, in S809 and S808, the number of sheets 1903 predicted in S806 is displayed in the sign diagnosis result 1902 of the UI display unit 241, and then the processing moves. Also, if automatic repair is not possible (No in S807), a countermeasure 1904 is also displayed in S808.

Note that the method for notifying the results of the inspection processing and the sign diagnosis processing is not limited to the above description, and any method by which the results can be checked may be used. These result screens may be displayed on the display unit 264 of the client PC 103, the display unit 254 of the external controller 102, or the UI display unit 225 of the printing unit 107. Also, the display may be such that the inspection result and the sign diagnosis result are switched. When the determination result is No in S803, S809 is completed, or the notification of the results is completed in S808, the processing moves to S405.

As described above, when an image is formed on a recording medium by the image forming unit, the diagnostic apparatus according to this embodiment performs diagnosis (inspection) of an abnormality of the image, regardless of the result of the determination as to whether or not to execute the sign diagnosis processing. This makes it possible to use a portion of the read image inspected in the inspection processing and set the sign detection level according to the inspection level, thereby utilizing the inspection image to perform sign diagnosis in accordance with the user's image abnormality level.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A diagnostic apparatus comprising:
determining means for determining whether or not to execute sign diagnosis processing for detecting a sign of abnormality of image forming means when an image is formed on a recording medium by the image forming means;
executing means for executing the sign diagnosis processing on a read image obtained by reading means reading the image formed by the image forming means, in a case where it is determined that the sign diagnosis processing is to be executed; and
performing means for performing, in a case where the sign of abnormality is detected, automatic repair of the image forming means before the sign of abnormality becomes an abnormality of a predetermined level.

2. The diagnostic apparatus according to claim 1, further comprising:
extracting means for extracting, from the detected sign of abnormality, a feature amount for specifying whether the sign of abnormality has occurred in any part of the image forming means; and
specifying means for specifying, based on the extracted feature amount, the part of the image forming means where the sign of abnormality has occurred.

3. The diagnostic apparatus according to claim 2, wherein
the feature amount includes size information and shape information of the sign of abnormality, and period information on a period at which the sign of abnormality occurs.

4. The diagnostic apparatus according to claim 3, further comprising:
predicting means for predicting a timing when the detected sign of abnormality will become an abnormality of the predetermined level based on the extracted feature amount.

5. The diagnostic apparatus according to claim 4, wherein
the predicting means predicts a timing when the detected sign of abnormality will become the abnormality of the predetermined level, based on the feature amount and the specified part.

6. The diagnostic apparatus according to claim 5, wherein
the predicting means predicts a number of sheets of image formation performed by the image forming means on a recording medium, using the timing when the detected sign of abnormality will become the abnormality of the predetermined level.

7. The diagnostic apparatus according to claim 6, further comprising:
displaying means for displaying a sign diagnosis result together with the timing when the detected sign of abnormality will become an abnormality of the predetermined level.

8. The diagnostic apparatus according to claim 1, wherein
the determining means, at each timing when the image formation performed by the image forming means on the recording medium reaches a predetermined number of sheets, or at a timing when sign diagnosis processing that is being executed ends, determines that the sign diagnosis processing is to be executed.

9. The diagnostic apparatus according to claim 8, wherein
the predetermined number of sheets is set according to user input.

10. The diagnostic apparatus according to claim 8, wherein
the determining means performs determination to set the timing of executing the sign diagnosis processing to an earlier time, in a case where the previously-detected sign of abnormality is close to the predetermined level.

11. The diagnostic apparatus according to claim 2, wherein
the determining means determines whether or not to execute the sign diagnosis processing under a different determination condition for each specified parts.

12. The diagnostic apparatus according to claim 8, further comprising:
setting means for setting, as an abnormality of the predetermined level, a level selected according to user input from a plurality of image abnormality levels.

13. The diagnostic apparatus according to claim 12, wherein
the plurality of image abnormality levels are classified according to at least one of a size and a contrast of an abnormality.

14. The diagnostic apparatus according to claim 8, wherein
the one or more processors execute instructions in the one or more memory devices to perform diagnosis with images formed consecutively on a plurality of image recording media set as images that are diagnosis targets.

15. The diagnostic apparatus according to claim 8, wherein
performing means for performing, when an image is formed on a recording medium by the image forming means, diagnosis of an abnormality of the image, regardless of a result of determination performed by the determining means.

16. The diagnostic apparatus according to claim 8, further comprising
the reading means for reading the recording medium on which the image is formed by the image forming means.

17. A method for controlling the diagnostic apparatus, comprising:
determining whether or not to execute sign diagnosis processing for detecting a sign of abnormality of image forming means when an image is formed on a recording medium by the image forming means;
executing the sign diagnosis processing on a read image obtained by reading an image formed by the image forming means, in a case where it is determined that the sign diagnosis processing is to be executed; and
performing automatic repair of the image forming means before the sign of abnormality becomes an abnormality of a predetermined level, in a case where the sign of abnormality is detected in the sign diagnosis processing.

18. A non-transitory computer-readable storage medium storing a computer program for causing a computer to execute each step of a control method for a diagnostic apparatus, the control method comprising:
determining whether or not to execute sign diagnosis processing for detecting a sign of abnormality of image forming means when an image is formed on a recording medium by the image forming means;
executing the sign diagnosis processing on a read image obtained by reading an image formed by the image forming means, in a case where it is determined that the sign diagnosis processing is to be executed; and
performing automatic repair of the image forming means before the sign of abnormality becomes an abnormality of a predetermined level, in a case where the sign of abnormality is detected in the sign diagnosis processing.

19. An image forming apparatus, comprising:
image forming means for forming an image on a recording medium;
determining means for determining whether or not to execute sign diagnosis processing for detecting a sign of abnormality of the image forming means when an image is formed on a recording medium by the image forming means;
executing means for executing the sign diagnosis processing on a read image obtained by reading means reading the image formed by the image forming means, in a case where it is determined that the sign diagnosis processing is to be executed; and
performing means for performing, in a case where the sign of abnormality is detected, automatic repair of the image forming means before the sign of abnormality becomes an abnormality of a predetermined level.

20. The image forming apparatus according to claim19, further comprising
the reading means for reading the recording medium on which the image is formed by the image forming means.

21. A diagnostic apparatus comprising:
setting means for setting a number of sheets;
executing means for executing, each time image formation on a recording medium by image forming means reaches the set number of sheets, sign diagnosis processing for detecting a sign of abnormality of the image forming means on a read image obtained by reading means reading an image forming by the image forming means; and
performing means for performing, in a case where the sign of abnormality is detected, automatic repair of the image forming means.
